(19) Europäisches Patentamt
European Patent Office
Office européen des brevets

(11) Publication number: **0 108 634**
**B1**

(12) # EUROPEAN PATENT SPECIFICATION

(45) Date of publication of patent specification: **25.02.87**

(51) Int. Cl.$^4$: **C 09 D 5/16**

(21) Application number: **83306760.6**

(22) Date of filing: **07.11.83**

(54) **Marine antifouling paint.**

(30) Priority: **08.11.82 GB 8231873**

(43) Date of publication of application:
**16.05.84 Bulletin 84/20**

(45) Publication of the grant of the patent:
**25.02.87 Bulletin 87/09**

(84) Designated Contracting States:
**DE FR GB IT NL SE**

(56) References cited:
**GB-A-2 006 183**
**GB-A-2 095 263**

**PEINTURES, PIGMENTS, VERNIS, volume 27, 1951, H. RABATE "Réflexions à propos des peintures sous-marines", pages 619-628**

(73) Proprietor: **INTERNATIONAL PAINT Public Limited Company**
**18 Hanover Square**
**London W1A 2BB (GB)**

(72) Inventor: **Arnold, David Edward James**
**39 The Wynd**
**Gosforth Tyne and Wear, NE3 4LA (GB)**
Inventor: **Green, Georgina Elizabeth**
**18 Parkview**
**Wideopen Newcastle-upon-Tyne (GB)**

(74) Representative: **Hale, Stephen Geoffrey et al**
**J.Y. & G.W. Johnson Furnival House 14/18 High Holborn**
**London WC1V 6DE (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to marine antifouling paints generally used as top coat paints for ships' hulls.

The growth of marine organisms on the submarine parts of a ship's hull increases the frictional resistance of the hull to passage through water, leading to increased fuel consumption and/or a reduction in the speed of the ship. Marine growths such as barnacles and algae accumulate so rapidly that the remedy of cleaning and repainting as required is impractical. In general, the extent of fouling by marine organisms is limited by applying to the hull a top coat of a paint which releases a biocide for the marine organism. Traditionally, such paints have comprised a relatively inert binder with a biocidal pigment which is leached from the paint, but the most successful paints in recent years have been based on a polymeric binder to which the marine biocide is chemically bound and from which the biocidal moieties are gradually hydrolysed by sea water.

For example, U.S. Patent No. 4,191,579 describes and claims a paint based on a film-forming copolymer containing units of a triorganotin salt of an olefinically unsaturated carboxylic acid. Upon contact with sea water the copolymer looses triorganotin ions by ion-exchange with sea water. This generates a water-soluble resin which essentially is a copolymer salt formed as a result of the depletion in the copolymer organotin content and exchange with sodium ions present in sea water. This gradual dissolution of the copolymer means that a fresh antifouling paint surface is continuously revealed, prolonging the time for which biocide release at the paint surface is maintained above the lethal concentration. The paint of U.S. Patent No. 4,191,579 has the remarkable property that relatively moving sea water smooths the surface of the paint, removing excrescences composed of the paint. When it is painted on a ship the painted submarine surface of the ship can become smoother during the ordinary traffic of the ship, leading to improved efficiency. The smoothing of the paint is accompanied by the release of the biocidal triorganotin ions into the surrounding sea water.

The dissolution of the hydrolysed copolymer and the smoothing of the surface of the paint film are aided by the movement of the ship through sea water. If the ship is inactive for long periods, for example if it is laid up, the antifouling performance of the paint may be reduced. It is thus desirable to provide a marine antifouling paint which retains the outstanding antifouling and smoothing performance on moving ships of paints of the type disclosed in U.S. Patent No. 4,191,579 while having an improved antifouling performance on a ship which is inactive.

British Patent No. 1,405,582 and British Patent Applications Nos. 2,087,415 and 2,095,263 describe antifouling coatings including a triorganotin compound and a dithiocarbamate. We have found that the dithiocarbamate improves the antifouling performance of the paint on a ship which is inactive. However, paints containing a hydrolysable polymer and a metallic salt of an organic dithiocarbamate tend to gel or thicken on storage, particularly at tropical temperatures. It is therefore an object of the invention to improve the storage stability of such paints.

An article by H. Rabate in "Peintures, Pigments, Vernis", volume 27 1951 at pages 622—624 suggests the addition of a zeolite to an antifouling marine paint relying on the leaching of toxic materials from the paint. The author postulates that the pores of the paint film through which leaching takes place become obstructed by colloidal calcium carbonate which reduces the leaching rate of the toxic materials. He suggests that a zeolite of the type used in softening of water could prevent the deposit of colloidal calcium carbonate. He does not refer to the problem of gelation or lack of storage stability in antifouling paints based on a hydrolysable polymeric binder and a dithiocarbamate pigment.

A marine antifouling paint according to the invention comprises (a) a film-forming polymeric binder, which is a polymer containing at least 20 molar percent of monomer units comprising a hydrolysable salt or ester of an olefinically unsaturated carboxylic acid and is insoluble in water but is capable of being hydrolysed by sea water to generate a water-soluble salt of the polymer, and (b) a pigment component comprising (i) a metallic salt of an organic bis(dithiocarbamate) of the formula

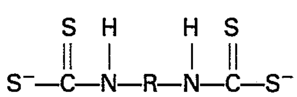

where R is an alkylene group having 2 to 6 carbon atoms, the bis(dithiocarbamate) being sparingly soluble in sea water, and (ii) a molecular sieve zeolite. The molecular sieve zeolite reduces the tendency of a hydrolysable polymer/dithiocarbamate paint to gel or thicken and gives the paint a commercially acceptable storage stability.

The film-forming polymeric binder is a polymer containing monomer units composed of a hydrolysable salt or ester of an olefinically unsaturated carboxylic acid, for example acrylic, methacrylic, maleic, fumaric or itaconic acid. The polymer contains at least 20 molar per cent of monomer units containing the carboxylate salt or ester group.

Most preferably the binder is a film-forming copolymer containing 50 to 80 per cent by weight of units of at least one triorganotin salt of an olefinically unsaturated carboxylic acid, the balance of the copolymer being units of at least one olefinically unsaturated comonomer as specified in U.S. Patent No. 4,191,579. Examples of triorganotin salts of olefinically unsaturated carboxylic acids are tributyltin, tripropyltin,

triethyltin, tribenzyltin, diethylbutyltin, triphenyltin, tritolyltin, diethylphenyltin and ethyldiphenyltin methacrylates and acrylates. Substances suitable as olefinically unsaturated comonomers include acrylic monomers, such as methyl acrylate, ethyl acrylate, propyl acrylate, butyl acrylate, amyl acrylate, hexyl acrylate as well as methyl methacrylate and the other corresponding esters of methacrylic acid, acrylonitrile and methacrylonitrile, and vinyl monomers, such as vinyl acetate, vinyl butyrate, vinyl chloride, vinyl propionate, styrene and vinyl pyridine. The polymer can contain monomer units conferring increased water reactivity, for example up to 20 per cent by weight of maleic or itaconic anhydride, acrylamide, methacrylamide or N-vinyl pyrrolidone.

As an alternative to the triorganotin salt groups the polymeric binder may contain 20 to 80 molar per cent of units of a quinolinyl or substituted quinolinyl ester of an olefinically unsaturated carboxylic acid, the balance of the copolymer being units of at least one olefinically unsaturated comonomer as described in British Patent Application No. 2106918.

Film-forming polymers of these types can be prepared by addition polymerisation of the appropriate monomers in the appropriate proportions at polymerisation conditions using a free radical catalyst such as benzoyl peroxide or azobisisobutyronitrile in an organic solvent such as xylene, toluene, butyl acetate, butanol, 2-ethoxy ethanol, cyclohexanone, 2-methoxy ethanol, 2-butoxy ethanol and/or 2-ethoxy ethyl acetate. Polymerisation is preferably carried out at a temperature in the range 70 to 100°C. Alternatively the paint can be an aqueous emulsion paint based on a film-forming acrylic polymer prepared by emulsion polymerisation of the appropriate monomers in the appropriate proportions at emulsion polymerisation conditions in the presence of a free radical catalyst.

The polymeric binder is mixed with the pigment component or the individual ingredients of the pigment component. Conventional blending procedures may be used.

The metallic salt of the organic bis(dithiocarbamate) is preferably a cuprous salt or a divalent metal salt, for example a zinc, manganese, magnesium, calcium or barium salt. The preferred bis(dithiocarbamate)s of the formula

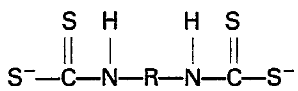

are those in which R is an ethylene group. Examples of effective dithiocarbamates are zinc ethylene bis(dithiocarbamate), manganese ethylene bis(dithiocarbamate) and cuprous ethylene bis(dithiocarbamate). The dithiocarbamate is preferably used as at least 10 per cent by volume of the pigment component of the paint, for example 10 to 90 per cent by volume.

The pigment component can also include another sparingly soluble metalliferous pigment, particularly a zinc or copper compound such as zinc oxide, cuprous oxide or cuprous thiocyanate. For example, one type of preferred coating contains a pigment component comprising 20 to 70 per cent by volume of the dithiocarbamate and 20 to 70 per cent by volume of a sparingly soluble zinc or copper compound. The sparingly soluble pigments generally have a solubility in sea water of 1 to 10 parts per million by weight.

Molecular sieve zeolites are described in "Encyclopaedia of Chemical Technology" (Kirk-Othmer) at pages 638 to 669 of volume 15 of the 3rd edition (published Wiley 1981), the contents of which pages are incorporated herein by reference. They are crystalline aluminosilicates of non-transition elements of group 1 or 2 of the Periodic Table, such as sodium, potassium, magnesium and/or calcium. Their crystalline structure contains channels or interconnected voids that can be occupied by small molecules such as hydrogen sulphide or water. The molecular sieve zeolite used in the present invention is preferably dried to the extent that it is capable of absorbing at least 10 per cent of its weight of water. We have found that the molecular seive zeolite is much more effective in preventing gelation and thickening of the paint than other known water-absorbing materials such as calcium sulphate or calcium chloride. One example of a suitable molecular sieve zeolite is "Molecular Sieve 5A" sold by Union Carbide. This material is a calcium aluminosilicate capable of absorbing molecules of size less than 5Å into its lattice. The molecular sieve zeolite preferably has a particle size of 1 to 5 microns. The molecular sieve zeolite is preferably used at 2 to 50 per cent by volume of the pigment component of the paint. We have found that less of the zeolite is required when the pigment component of the paint includes a sparingly soluble copper compound such as cuprous oxide or cuprous thiocyanate. The zeolite is preferably used at 10—25 per cent by volume of the pigment component when no copper compound is present and at 2—15 per cent by volume of the pigment when a copper compound is present.

When a copper compound is used with a dithiocarbamate in the pigment component of a paint an unattractive dark colour is produced in the dried paint film. We have found that the molecular sieve zeolite inhibits this discolouration. An epoxy compound can be used in conjunction with the zeolite to further inhibit discolouration. The epoxy compound is preferably a monoepoxide, for example an alkyl glycidyl ether such as the n-butyl, dodecyl or tetradecyl ether, a 1,2-epoxyalkane such as 1,2-epoxydodecane, 1,2-epoxyoctadecane or 1,2-epoxy-3,3-dimethylbutane, epoxycyclohexane, or a low molecular weight diepoxide such as the diglycidyl ether of bisphenol A. The epoxy compound is preferably used at 0.5 to 4 per cent based on the dry weight of the paint.

The proportion of pigment to polymeric binder in the paint is generally such as to give a pigment

volume concentration of from 25 per cent up to the critical pigment volume concentration. Preferably the pigment volume concentration is in the range of 35 to 50 per cent.

The invention is illustrated by the following Examples in which parts, ratios and percentages are by weight unless otherwise stated:

Example 1

24 parts tributyltin methacrylate and 16 parts methyl methacrylate were dissolved in 60 parts xylene. 0.35 part benzoyl peroxide were added and the temperature was raised gradually over 10 hours, cooling as necessary to control the exotherm, to a final temperature of 110°C. The resulting 40 per cent solution of a 60:40 tributyltin methacrylate:methyl methacrylate copolymer in xylene was blended with zinc ethylene bis(dithiocarbamate) and zinc oxide used in equal parts by volume to give a pigment volume concentration of 35 per cent together with small amounts of structuring agents (colloidal silica and bentonite). The dry zeolite powder "Molecular Sieve 5A" described above was blended into the paint in an amount of 5 per cent based on the paint, equivalent to 25 per cent by volume of the total pigment.

The paint was stored in cans in an accelerated storage test at 45°C. The initial viscosity of the paint as measured by a cone and plate viscometer was 2.6 poise. The viscosity increased to 4.7 poise after 10 days and to 8.8 poise after 28 days but the paint was still sufficiently fluid after 28 days to be applied satisfactorily by airless spray. By way of comparison the same paint without the molecular sieve gelled within 10 days when stored at 45°C.

In further comparative tests other possible stabilisers were blended into the paint in the same proportion of 5 per cent and subjected to storage tests at 45°C. The materials tested were p-methoxy phenol, micaceous iron oxide, sodium citrate, "Cereclor 48" chlorinated paraffin, calcium sulphate, hydroquinone and 8-hydroxy quinoline. In all cases the paints gelled within 10 days.

Example 2

The process of Example 1 was repeated using manganese ethylene bis(dithiocarbamate). In the storage tests at 45°C the paint containing 5 per cent of the molecular sieve had a viscosity of 4.6 poise initially, rising to 5.2 poise after ten days and 6.7 poise after 20 days. The comparison paint containing no molecular sieve gelled within 10 days.

Examples 3 to 12

Paints were prepared using the copolymer solution described in Example 1 together with sufficient pigment component having the compositions described in the Table below to give a pigment volume concentration of 35 per cent. All the paints were subjected to an accelerated storage test at 45°C. The results in the Table show the viscosity at 25°C in poise initially and after 14 and 27 days' storage at 45°C.

The viscosities of "above 10" quoted in Examples 3 and 6 in the Table indicate that the paint had thickened but not gelled. Such a paint would not be directly suitable for application by airless spray but could be thinned by solvent to make it suitable.

All of the paints of Examples 1 to 12 were seen to dissolve smoothly in relatively moving sea water when tested during the apparatus shown in Figures 5 and 6 of U.S. Patent No. 4,191,579.

TABLE

| Example No. | Pigment composition (% by volume) | | | Viscosity in poise | | |
|---|---|---|---|---|---|---|
| | Zinc ethylene bis(dithiocarbamate) | Zinc oxide | Molecular sieve 5A | Initially | After 14 days | After 27 days |
| 3 | 45 | 45 | 10 | 4.8 | 9.2 | above 10 |
| 4 | 20 | 70 | 10 | 5.6 | 8.4 | above 10 |
| 5 | 80 | 0 | 20 | 3.7 | 7.7 | above 10 |
| 6 | 60 | 20 | 20 | 3.9 | 7.0 | above 10 |
| 7 | 40 | 40 | 20 | 4.4 | 6.4 | 9.1 |
| 8 | 20 | 60 | 20 | 4.8 | 6.4 | 8.0 |
| 9 | 60 | 0 | 40 | 3.0 | 4.7 | 5.8 |
| 10 | 45 | 15 | 40 | 3.1 | 4.3 | 5.6 |
| 11 | 30 | 30 | 40 | 3.4 | 4.5 | 4.8 |
| 12 | 15 | 45 | 40 | 3.6 | 4.2 | 4.6 |

Example 13

36.6 parts of a 60 per cent solution of a 60:40 tributyltin methacrylate:methyl methacrylate copolymer in xylene were blended with 2.3 parts of antisettling agents and stabilisers, 39.3 parts of pigments, 0.52 part of monoepoxide, 21.7 parts of additional xylene solvent and 0.4 part of butanol. The pigment component comprised 54.3 per cent by volume zinc oxide, 27.1 per cent by volume zinc ethylene bis(dithiocarbamate), 9.0 per cent by volume cuprous oxide, 5.7 per cent by volume titanium dioxide and 3.9 per cent by volume "Molecular Sieve 5A". The monoepoxide was an alkyl glycidyl ether in which the alkyl group was a mixture of n-dodecyl and n-tetradecyl groups.

After 2 months in an accelerated storage test at 45°C the paint was still sufficiently fluid to be applied satisfactorily by airless spray and had maintained its pale blue colour without substantial darkening.

Example 14

Example 13 was repeated using the diglycidyl ether of bisphenol A in place of the monoepoxide. The paint again survived the accelerated storage test without unacceptable thickening or darkening.

Example 15

32.0 parts of the copolymer solution used in Example 13 was blended with 2.3 parts of antisettling agents and stabilisers, 54.3 parts of pigment, 0.3 part of butanol and 0.5 part of the alkyl glycidyl ether used in Example 13. The pigment component comprised 65.6 per cent by volume cuprous oxide, 21.3 per cent by volume zinc ethylene bis(dithiocarbamate), 10.2 per cent by volume titanium dioxide and 2.8 per cent by volume "Molecular Sieve 5A". The paint survived the accelerated storage test described in Example 13 without unacceptable thickening and without substantial darkening of the pink colour of the paint.

**Claims**

1. A marine anti-fouling paint comprising a film-forming polymeric binder which is a polymer containing at least 20 molar per cent of monomer units comprising a hydrolysable salt or ester of an olefinically unsaturated carboxylic acid and is insoluble in water but is capable of being hydrolysed by sea water to generate a water-soluble salt of the polymer and a pigment component comprising a metallic salt of an organic bis(dithiocarbamate) of the formula:—

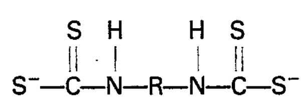

where R is an alkylene group having 2 to 6 carbon atoms, the bis(dithiocarbamate) salt being sparingly

soluble in sea water, characterised in that the pigment component of the paint also comprises a molecular sieve zeolite.

2. A marine ani-fouling paint according to claim 1, characterised in that the binder is a film-forming copolymer containing 50—80 per cent by weight of units of at least one triorganotin salt of an olefinically unsaturated carboxylic acid, the balance of the copolymer being units of at least one olefinically unsaturated comonomer.

3. A marine anti-fouling paint according to claim 1 or 2, characterised in that the metallic salt of an organic dithiocarbamate is zinc ethylene bis(dithiocarbamate).

4. A marine anti-fouling paint according to any of claims 1 to 3, characterised in that the pigment component comprises 20 to 70 per cent by volume of the metallic salt of an organic bis(dithiocarbamate) and 20 to 70 per cent by volume of one or more additional pigments selected from zinc oxide, cuprous oxide and cuprous thiocyanate.

5. A marine anti-fouling paint according to any of claims 1 to 4, characterised in that the pigment component is substantially free from copper compounds and contains 10 to 25 per cent by volume of the molecular sieve zeolite.

6. A marine anti-fouling paint according to any of claims 1 to 4, characterised in that the pigment component includes a copper compound and contains 2 to 15 per cent by volume of the molecular sieve zeolite.

7. A marine anti-fouling paint according to any of claims 1 to 6, characterised in that it further comprises an epoxy compound.

8. A marine anti-fouling paint according to claim 7, characterised in that the epoxy compound is a monoepoxide.

**Patentansprüche**

1. Anwuchsverhindernder Unterseeanstrich, bestehend aus einem filmbildenden polymeren Bindemittel, welches ein Polymer mit mindestens 20 Molprozent aus einem hydrolysierbaren Salz oder Ester einer olefinisch ungesättigten Carbonsäure bestehenden Monomereinheiten darstellt und in Wasser unlöslich aber durch Seewasser unter Bildung eines wasserlöslichen Salzes des Polymeren hydrolysierbar ist, sowie einer Pigmentkomponente, die aus einem Metallsalz eines organischen Bis-dithiocarbamats der Formel

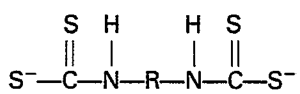

worin R eine Alkylengruppe mit 2 bis 6 Kohlenstoffatomen bedeutet, besteht, wobei das Bis-dithiocarbamat-Salz in Seewasser schwerlöslich ist, dadurch gekennzeichnet, dass die Pigmentkomponente des Anstrichs ferner einen Molekularsiebzeolith enthält.

2. Anwuchsverhindernder Unterseeanstrich nach Anspruch 1, dadurch gekennzeichnet, dass das Bindemittel ein filmbildendes Copolymer mit 50—80 Gewichtsprozent Einheiten mindestens eines Triorganozinn-Salzes einer olefinisch ungesättigten Carbonsäure enthält, wobei der Rest des Copolymeren aus Einheiten mindestens eines olefinisch ungesättigten Comonomeren besteht.

3. Anwuchsverhindernder Unterseeanstrich nach Anspruch 1 oder 2, dadurch gekennzeichnet, dass als Metallsalz eines organischen Dithiocarbamats Zink-äthylen-bis-dithiocarbamat vorliegt.

4. Anwuchsverhindernder Unterseeanstrich nach einem der Ansprüche 1 bis 3, dadurch gekennzeichnet, dass die Pigmentkomponente 20 bis 70 Volumenprozent des Metallsalzes eines organischen Bis-dithiocarbamats und 20 bis 70 Volumenprozent eines oder mehrerer, unter Zinkoxyd, Kupfer(I)oxyd und Kupfer(I)thiocyanat ausgewählter zusätzlicher Pigmente enthält.

5. Anwuchsverhindernder Unterseeanstrich nach einem der Ansprüche 1 bis 4, dadurch gekennzeichnet, dass die Pigmentkomponente weitgehend frei von Kupferverbindungen ist und 10 bis 25 Volumenprozent des Molekularsiebzeolithen enthält.

6. Anwuchsverhindernder Unterseeanstrich nach einem der Ansprüche 1 bis 4, dadurch gekennzeichnet, dass die Pigmentkomponente eine Kupferverbindung einschliesst und 2 bis 15 Volumenprozent des Molekularsiebzeolithen enthält.

7. Anwuchsverhindernder Unterseeanstrich nach einem der Ansprüche 1 bis 6, dadurch gekennzeichnet, dass er ferner eine Epoxyverbindung enthält.

8. Anwuchsverhindernder Unterseeanstrich nach Anspruch 7, dadurch gekennzeichnet, dass als Epoxyverbindung ein Monoepoxyd vorliegt.

**Revendications**

1. Un revêtement marin anti-salissure comprenant un liant polymère filmogène, qui est un polymère contenant au moins 20 pour cent molaire de motifs monomères comprenant un ester ou un sel hydrolysable d'un acide carboxylique à insaturation oléfinique et qui est insoluble dans l'eau mais qui peut

être hydrolysé par l'eau de mer pour engendrer un sel hydrosoluble du polymère et un composant pigment comprenant un sel métallique d'un bis(dithiocarbamate) organique de formule:

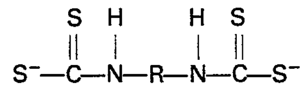

dans laquelle R est un groupe alkylène ayant de 2 à 6 atomes de carbone, le sel bis(dithiocarbamate) étant peu soluble dans l'eau de mer, caractérisé en ce que le composant pigment du revêtement comprend aussi une zéolite tamis moléculaire.

2. Un revêtement marin anti-salissure selon la revendication 1, caractérisé en ce que le liant est un copolymère filmogène contenant 50—80 pour cent en poids de motifs d'au moins un sel de triorganoétain d'un acide carboxylique à insaturation oléfinique, le reste du copolymère étant des motifs d'au moins un comonomère à insaturation oléfinique.

3. Un revêtement marin anti-salissure selon la revendication 1 ou 2, caractérisé en ce que le sel métallique d'un dithiocarbamate organique est l'éthylène bis(dithiocarbamate) de zinc.

4. Un revêtement marin anti-salissure selon l'une quelconque des revendications 1 à 3, caractérisé en ce que le composant pigment comprend de 20 à 70 pour cent en volume du sel métallique d'un bis(dithiocarbamate) organique et de 20 à 70 pour cent en volume d'un ou de plusieurs pigments supplémentaires sélectionnés parmi l'oxyde de zinc, l'oxyde cuivreux et le thiocyanate cuivreux.

5. Un revêtement marin anti-salissure selon l'une quelconque des revendications 1 à 4, caractérisé en ce que le composant pigment est sensiblement dépourvu de composés de cuivre et contient de 10 à 25 pour cent en volume de la zéolite tamis moléculaire.

6. Un revêtement marin anti-salissure selon l'une quelconque des revendications 1 à 4, caractérisé en ce que le composant pigment inclut un composé de cuivre et contient de 2 à 15 pouc cent en volume de la zéolite tamis moléculaire.

7. Un revêtement marin anti-salissure selon l'une quelconque des revendications 1 à 6, caractérisé en ce qu'il comprend en outre un composé époxy.

8. Un revêtement marin anti-salissure selon la revendication 7, caractérisé en ce que le composé époxy est un monoépoxyde.